# EUROPÄISCHE PATENTSCHRIFT

(11) **EP 0 424 894 B1**
(45) Veröffentlichungstag und Bekanntmachung des Hinweises auf die Patenterteilung: **20.07.1994**
(21) Anmeldenummer: 90120346.3
(22) Anmeldetag: 23.10.1990
(51) Int. Cl.: B01D 53/34

(54) **Verfahren zum Einbringen eines Behandlungsmediums in den Abgasstrom bei Verbrennungsprozessen**
Method of supplying a treating agent into an exhaust stream of combustion processes
Méthode pour alimenter un moyen de traitement dans des gaz d'échappement des procédés de combustion

(30) Priorität: 24.10.1989 DE 3935402
(43) Veröffentlichungstag der Anmeldung: 02.05.1991
(73) Patentinhaber: MARTIN GmbH für Umwelt- und Energietechnik, D-80807 München (DE)
(72) Erfinder: Martin, Johannes Josef Edmund, W-8124 Seeshaupt (DE)
(74) Vertreter: Zmyj, Erwin, Dipl.-Ing., Dipl.-Wirtsch.-Ing.

(56) Entgegenhaltungen:
- EP-A- 0 263 183
- EP-A- 0 337 515
- WO-A-88/08824
- WO-A-89/07982

## Beschreibung

Die Erfindung bezieht sich auf ein Verfahren zum Einbringen eines Behandlungsmediums in Form von Chemikalien in den Abgasstrom bei Verbrennungsprozessen mittels eines Trägermediums durch eine Zerstäubungsdüse zur Verminderung der Stickoxidkonzentration.

Zur Verminderung der Stickoxid-Emissionen ist es bekannt, Chemikalien, in der Regel Ammoniak, Salmiak, Harnstoff oder Kalstickstoff, die unter Umständen mit verschiedenen Kohlenwasserstoffverbindungen als sogenannte Verstärkerchemikalien vermischt werden, in den heißen Abgasstrom einzuführen. Die Einführung erfolgt bei Temperaturen von mindestens 600°C, wobei einer möglichst guten, gleichmäßigen Verteilung der Chemikalien eine entscheidende Bedeutung für den optimalen Ablauf der chemischen Reaktionen zur Bindung bzw. Reduktion der Stickoxide zukommt. Gemäß dem derzeitigen Stand der Technik wird die gleichmäßige Verteilung über den gesamten Rauchgasstrom einerseits durch die Anordnung mehrer Düsen über den Querschnitt des Rauchgaszuges erreicht, sowie andererseits - und dem wird in der Regel sogar eine besonders hohe Bedeutung beigemessen - durch Einsatz von Zweistoffdüsen, wie sie beispielsweise aus der WO-A-89/07982 bekannt sind, denen Dampf oder Druckluft als Zerstäubermedium zugeführt wird. Gerade die Verwendung eines eigenen Zerstäubermediums hat jedoch mehrere Nachteile. Druckluft oder Dampf sind relativ teure Medien, da sie immer hohe Energiemengen und im Falle der Anwendung von Dampf, aufbereitetes Dampfkesselspeisewasser benötigen. Leitungsführungen dieser Medien bis hin zu den einzelnen Düsen gestalten sich aufwendig, da entweder wärmeisolierte Rohre im Falle von Dampf und/oder relativ große Rohrquerschnitte zur Minderung des Druckverlustes im System verwendet werden müssen. Die Expansion der Medien am Düsenaustritt bzw. die Medienströmungen in den Leitungen erzeugen einen relativ hohen Geräuschpegel, der häufig sogar Schallisolationen notwendig macht. Weiterhin muß zusätzlich in Kauf genommen werden, daß eine unerwünschte Verdünnung der Rauchgase durch Luft oder Dampf den Wirkungsgrad der Dampferzeugung oder eventuell der Abgasreinigungsanlage schmälert.

Der Einsatz von Zweistoffdüsen bringt auch den Nachteil mit sich, daß das Trägermedium, welches zur Zerstäubung des Behandlungsmediums, nämlich der Chemikalien dient, in großer Menge eingesetzt werden muß, da die Zerstäubung aufgrund kinetischer Energie des Trägermediums herbeigeführt wird. Hierdurch tritt auch bei geringen zu zerstäubenden Mengen eine große Verdünnung der Rauchgase ein.

Aufgabe der Erfindung ist es die Einführung eines Behandlungsmediums, d. h. bestimmter Chemikalien in das Rauchgas bei hohem Wirkungsgrad mit einem geringen Aufwand an Energie und geringem baulichen Aufwand zu ermöglichen.

Diese Aufgabe wird ausgehend von einem Verfahren der eingangs erläuterten Art erfindungsgemäß dadurch gelöst, daß das Trägermedium auf ein für die Zerstäubung notwendiges Druckniveau gebracht und einer, eine einzige Düsenöffnung aufweisenden Zerstäubungsdüse zugeführt wird und daß der Zerstäubungsdüse das Behandlungsmedium zugeführt wird, welches mit dem Trägermedium unmittelbar vor dem Austritt aus der Düsenöffnung in jedem beliebigen Mengenverhältnis gemischt wird, wobei das Behandlungsmedium vor dem Mischvorgang auf das Druckniveau des Trägermediums gebracht wird.

Mit Hilfe dieses Verfahrens ist es möglich, jede beliebige Menge an Behandlungsmedien in das Rauchgas einzuführen, ohne die Düse bei unterschiedlichen Drücken und Durchflußmengen zu betreiben, so daß die Düse stets mit bestem Wirkungsgrad arbeitet. Die Menge des einzuführenden Behandlungsmediums wird dadurch verändert, daß das Verhältnis von Trägermedium und Behandlungsmedium vor dem Zerstäubungsvorgang unterschiedlich eingestellt wird. Im Gegensatz zu den Zweistoffdüsen, bei denen bei einer Verringerung der Menge an Behandlungsmedium auch eine Verringerung des Trägermediums notwendig war, und bei denen bei einer erhöhung des Behandlungsmediums zwangsläufig eine Erhöhung des Trägermediums erforderlich wurde, kann hier bei Verwendung einer Einstoffdüse diese stets unter gleichen Bedingungen betrieben werden. Außerdem erfolgt bei einer Einstoffdüse die Zerstäubung des Behandlungsmediums nicht aufgrund von kinetischer Energie, die mittels des Trägermediums aufgebracht werden muß, sondern aufgrund der Druckänderung vor und nach der Düsenöffnung, was zu einer wesentlichen Verringerung des Trägermediums führt. Dieses ist notwendig, um die Düse mit einer bestimmten Durchsatzmenge zu betreiben, unabhängig davon, wie hoch der Anteil und die Menge des Behandlungsmediums ist. Weiterhin kann das Trägermedium dazu dienen die Zerstäubungsdüse zu kühlen, falls die Zerstäubung des Behandlungsmediums vollständig eingestellt wird. In diesem Falle würde die Düse aufgrund der Hitzeeinwirkung im Feuerungsraum Beeinträchtigungen unterliegen, die durch die Zerstäubung des Trägermediums vermieden werden.

Gemäß einer Weiterbildung der Erfindung kann die Menge des zugemischten Behandlungsmediums in Abhängigkeit von der NOₓ -Gaskonzentration im behandelten Rauchgasstrom eingestellt werden. Die NOₓ-Gaskonzentration wird also in einem Bereich gemessen, in dem sich bereits das Behandlungsmedium befindet und die entsprechende chemische Reaktion stattgefunden hat.

Die Menge des Behandlungsmediums kann aber auch in Abhängigkeit von der Abgasmenge eingestellt werden.

Weiterhin kann gemäß einer vorteilhaften Ausgestaltung der Erfindung der Zerstäubungsdruck in Abhängigkeit von der Abgasmenge eingestellt werden.

Um bei der Zuführung des Behandlungsmediums übermäßige Druckschwankungen im Gesamtsystem zu vermeiden empfiehlt es sich in Weiterbildung der Erfindung, daß das Behandlungsmedium in konzentrierter Form der Zerstäubungdüse zugeführt wird, wobei die Konzentration in Abhängigkeit vom Mengenbedarf einstellbar ist. Generell kann dabei bis an die jeweilige Lösungsgrenze des Behandlungsmediums aufkonzentriert werden.

Als Behandlungsmedium kann beispielsweise Ammoniak, Salmiak, Harnstoff oder Kalkstickstoff verwendet werden. Bei diesen Behandlungsmediem empfiehlt es sich als Trägermedium Wasser zu verwenden.

Die Erfindung wird nachstehend anhand der Zeichnungen näher erläutert. In dieser zeigen:
- Fig. 1 :: ein schematisches Fließbild für das Trägermedium und das Behandlungsmedium;
- Fig. 2 :: eine schematische Darstellung des Verfahrensfließbildes gemäß Fig. 1 in Verbindung mit dem Regelsystem;
- Fig. 3 :: einen Schnitt durch eine Zerstäubungsdüse zur Anwendung beim erfindungsgemäßen Verfahren.

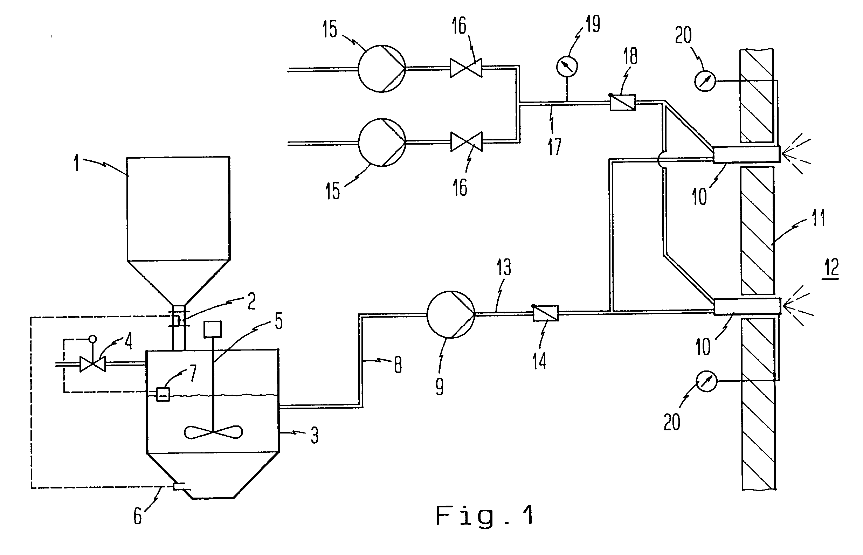

Aus Fig. 1 ist das schematische Fließbild für das Trägermedium und das Behandlungsmedium ersichtlich. Danach ist mit 1 ein Vorratsbehälter für die in den Feuerraum einzubringende Chemikalie bezeichnet, welche sich im Beispielsfall in diesem Behälter in pulverigem Zustand befindet. Über eine Schleuse 2 gelangt die Chemikalie in einen Vorlagebehälter 3, in welchem über ein Ventil 4 Wasser zur Auflösung der Chemikalie eingeführt wird. Mittels eines Rührers 5 wird die angesetzte Lösung bzw. Suspension ständig in Umwälzbewegung gehalten, um eine Entmischung zu verhindern. Mit 6 ist ein Niveauüberwachungssystem bezeichnet, welches für die Zufuhr von Chemikalien aus dem Vorratsbehälter 1 bei Unterschreitung des Minimalstandes sorgt. Ein Schwimmer 7 überwacht den Flüssigkeitsstand im Vorlagebehälter 3 und beeinflußt das Ventil 4 zur Zuführung von Wasser in den Vorlagebehälter 3. Über eine Leitung 8 wird mittels einer Pumpe 9 das Behandlungsmedium mehreren Zerstäubungsdüsen 10 zugeführt, die in der Wand 11 eines Feuerraumes 12 in mehreren Ebenen verteilt angeordnet sind. In der Druckleitung 13, die von der Pumpe 9 zu den Zerstbungsdüsen 10 führt, ist ein Rückschlagventil 14 vorgesehen, um das Zurückströmen von Trägermedium in den Vorlagebehälter 3 zu vermeiden. Das Trägermedium, welches in dem vorliegenden Beispiel Wasser ist, wird mittels Pumpen 15 über Ventile 16 einer Druckleitung 17 zugeführt, die zu den Zerstäubungsdüsen 10 führt. Innerhalb der Druckleitung ist ein Rückschlagventil 18 und eine Druckmeßstelle 19 vorgesehen. Eine weitere Druckmeßstelle 20 überwacht den Druck in den Zerstäubungdüsen 10.

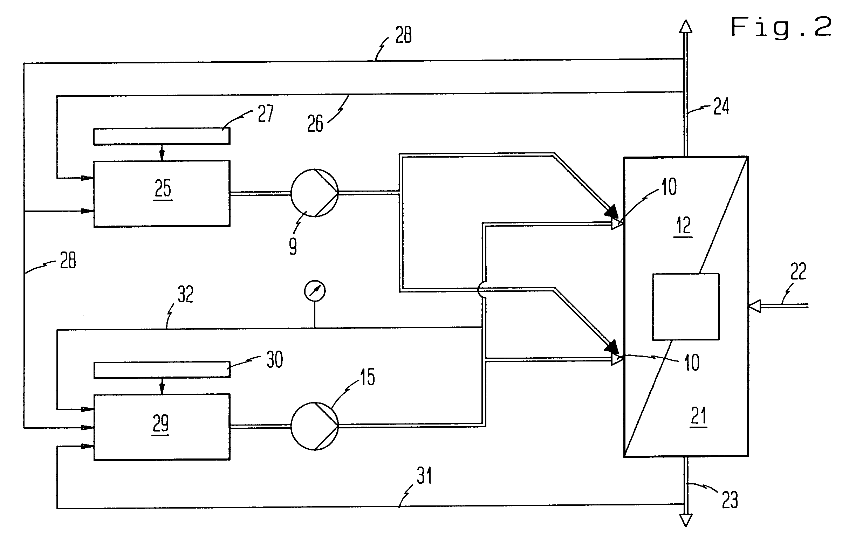

Anhand von Fig. 2 wird nun das Regelsystem erläutert, mit dessen Hilfe die Einbringung des Behandlungsmediums geregelt wird. Soweit es sich um Teile handelt, die bereits in Fig. 1 beschrieben sind, werden die gleichen Bezugszeichen verwendet. Mittels der Pumpen 9 und 15 wird Behandlungsmedium und Trägermedium zu den Zerstäubungsdüsen 10 geführt, die in den Feuerraum 12 einmünden. Mit 21 ist der Kessel insgesamt bezeichnet, dem über eine Leitung 22 Speisewasser zugeführt wird. Mit 23 ist die Dampfentnahmeleitung bezeichnet, während das Bezugszeichen 24 den Rauchgasabzug symbolisiert.

Mittels eines Regelsystems 25 wird die Fördermenge des Behandlungsmediums, d. h. der Chemikalie eingestellt, die zur Einbringung in den Feuerraum 12 vorgesehen ist. Die Regelung erfolgt in Abhängigkeit von der NOₓ-Gaskonzentration im Rauchgas 24, wobei die Messung dieser Gaskonzentration an einer Stelle vorgenommen wird, in der sich bereits behandeltes, d. h. mit Behandlungsmedium versetztes Rauchgas befindet. Dieses Signal wird über die Leitung 26 dem Regelsystem 25 zugeführt. Mittels eines Sollwertgebers 27 für den Sollwert des NOₓ-Gehaltes im Rauchgas wird derjenige Wert eingestellt, bei dessen Überschreitung die Zufuhr von Behandlungsmedium in den Feuerraum zur Behandlung des Rauchgases einsetzt. Die Regelung der Zuführung des Behandlungsmediums erfolgt also in Abhängigkeit von der Differenz zwischen dem über die Leitung 26 zugeführten tatsächlichen NOₓ-Gehaltes und dem durch den Sollwertgeber 27 vorgegebenen Wert. Weiterhin kann das Regelsystem 25 die zugeführte Menge an Behandlungsmedium auch in Abhängigkeit vom Rauchgas-Volumenstrom regeln, wobei dieser Wert im Rauchgasabzug 24 gemessen und durch die Leitung 28 dem Regelsystem 25 zugeführt wird.

Dieser, den Volumenstrom des Rauchgases betreffende Meßwert wird über die Leitung 28 auch einem weiteren Regelsystem 29 zugeleitet, welches zur Einstellung des Zerstäubungsdruckes vorgesehen ist. Ein Sollwertgeber 30 für den Zerstäubungsdruck gibt einen auf die Düsenkonfiguration abgestimmten Festwert vor oder der Zerstäubungsdruck kann inAbhängigkeit vom Rauchgasvolumenstrom oder von der Dampfkessel-Last eingestellt werden. Der Meßwert, der den Rauchgasvolumenstrom betrifft, wird über die Leitung 28 zugeführt, während der Meßwert betreffend die Dampfkessel-Last über die Leitung 31 zugeführt wird. Mit 32 ist eine Signalleitung bezeichnet, die den tatsächlich herrschenden Zerstäubungsdruck dem Regelsystem 29 zuführt.

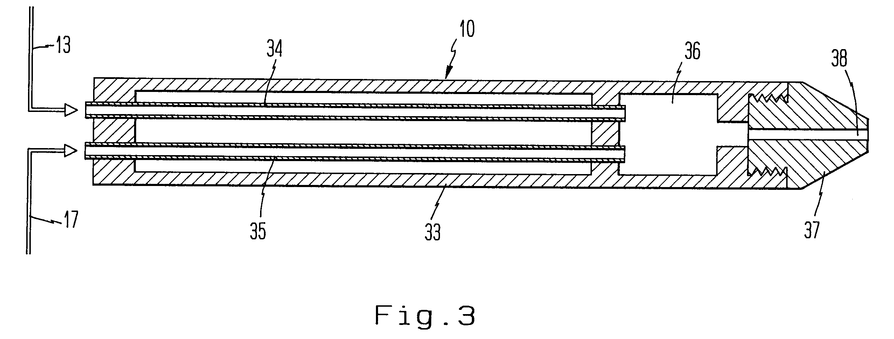

Fig. 3 zeigt einen schematischen Schnitt durch eine Zerstäubungsdüse 10. Diese weist einen Düsenkörper 33 auf, der einerseits Zuführungsleitungen 34 und 35 und andererseits eine Mischkammer 36 umfaßt. Die Zuführungsleitungen 34 und 35 münden in die Mischkammer 36 und sind an ihren anderen Enden mit der Zuführungsleitung 13 für das Behandlungsmedium und mit der Zuführungsleitung 17 für das Trägermedium verbunden. Unmittelbar im Anschluß an die Mischkammer 36, in der das Trägermedium und das Behandlungsmedium miteinander vermischt werden, schließt sich ein auf den Düsenkörper 33 aufschraubbarer Düsenkopf 37 an, der efne Zerstäubungsbohrung 38 aufweist, aus der das Gemisch aus Trägermedium und Behandlungsmedium unter Druck austritt und aufgrund des herrschenden Druckunterschiedes innerhalb und außerhalb der Zerstäubungsdüse fein zerstäubt wird.

## Patentansprüche

1. Verfahren zum Einbringen eines Behandlungsmediums in Form von Chemikalien in den Abgasstrom bei Verbrennungsprozessen mittels eines Trägermediums durch eine Zerstäubungsdüse zur Verminderung der Stickoxid-Konzentration, bei welchem das Trägermedium auf ein für die Zerstäubung notwendiges Druckniveau gebracht und einer, eine einzige Düsenöffnung aufweisenden Zerstäubungsdüse zugeführt wird, welcher auch das Behandlungsmedium zugeführt wird, das mit dem Trägermedium unmittelbar vor dem Austritt aus der Düsenöffnung in jedem beliebigen Mengenverhältnis gemischt wird, wobei das Behandlungsmedium vor dem Mischvorgang auf das Druckniveau des Trägermediums gebracht wird.

2. Verfahren nach Anspruch 1, **dadurch gekennzeichnet**, daß die Menge des Behandlungsmediums in Abhängigkeit von der NOₓ-Gaskonzentration im behandelten Rauchgasstrom eingestellt wird.

3. Verfahren nach Anspruch 1, **dadurch gekennzeichnet**, daß die Menge des Behandlungsmediums in Abhängigkeit von der Abgasmenge eingestellt wird.

4. Verfahren nach einem der Ansprüche 1 bis 3, **dadurch gekennzeichnet**, daß der Zerstäubungsdruck in Abhängigkeit von der Abgasmenge eingestellt wird.

5. Verfahren nach einem der Ansprüche 1 bis 3, **dadurch gekennzeichnet**, daß der Zerstäubungsdruck in Abhängigkeit von der Dampfkessel-Last eingestellt wird.

6. Verfahren nach einem der Ansprüche 1 bis 5, **dadurch gekennzeichnet**, daß das Behandlungsmedium in konzentrierter Form der Zerstäubungsdüse zugeführt wird, wobei die Konzentration in Abhängigkeit vom Mengenbedarf einstellbar ist.

7. Verfahren nach einem der Ansprüche 1 bis 6, **dadurch gekennzeichnet**, daß als Behandlungsmedium Ammoniak, Salmiak, Harnstoff oder Kalkstickstoff verwendet wird.

8. Verfahren nach einem der Ansprüche 1 bis 7, **dadurch gekennzeichnet**, daß als Trägermedium Wasser verwendet wird.

## Claims

1. Method of supplying a treating agent in the form of chemicals into the exhaust gas stream in combustion processes by means of a carrier medium through a spray nozzle in order to reduce the nitrogen oxide concentration, in which the carrier medium is brought to a pressure level required for spraying and is supplied to a spray nozzle having a single nozzle opening, to which the treating agent is also supplied, said treating agent being mixed with the carrier medium in any desired ratio immediately before it emerges from the nozzle opening, the treating agent being brought to the pressure level of the carrier medium prior to the mixing process.

2. Method according to claim 1, characterised in that the quantity of treating agent is adjusted as a function of the NOₓ gas concentration in the treated waste gas stream.

3. Method according to claim 1, characterised in that the quantity of treating agent is adjusted as a function of the waste gas quantity.

4. Method according to one of claims 1 to 3, characterised in that the spray pressure is adjusted as a function of the waste gas quantity.

5. Method according to one of claims 1 to 3, characterised in that the spray pressure is adjusted as a function of the boiler load.

6. Method according to one of claims 1 to 5, characterised in that the treating agent is supplied to the spray nozzle in concentrated form, the concentration being adjustable as a function of the quantity required.

7. Method according to one of claims 1 to 6, characterised in that ammonia, sal ammoniac, urea or lime-nitrate is used as the treating agent.

8. Method according to one of claims 1 to 7, characterised in that water is used as the carrier medium.

## Revendications

1. Procédé pour alimenter un moyen de traitement sous forme de produits chimiques dans le courant de gaz de combustion émanant d'un processus de combustion en se servant d'un milieu vecteur amené vers une buse de pulvérisation, en vue de la diminution de la concentration des oxydes d'azote, procédé par lequel le milieu vecteur est ramené à un niveau de pression requis pour la pulvérisation et est conduit vers une buse de pulvérisation garnie d'un seul orifice de tuyère, buse à laquelle on amène aussi le moyen de traitement qui est mélangé, directement avant de sortir de l'orifice de tuyère, dans un quelconque rapport de quantités avec le milieu vecteur, le moyen de traitement étant amené au niveau de pression du milieu vecteur préalablement au processus de mélange.

2. Procédé suivant la revendication 1, caractérisé en ce que la quantité du moyen de traitement est réglée en fonction de la concentration des gaz NOx dans le courant de gaz de comoustion à traiter.

3. Procédé suivant la revendication 1, caractérisé en ce que la quantité du moyen de traitement est réglée en fonction de la quantité du gaz de combustion.

4. Procédé suivant l'une des revendications 1 à 3, caractérisé en ce que la pression de pulvérisation est réglée en fonction de la quantité du gaz de combustion.

5. Procédé suivant l'une des revendications 1 à 3, caractérisé en ce que la pression de pulvérisation est réglée en fonction de la charge de la chaudière à vapeur.

6. Procédé suivant l'une des revendications 1 à 5, caractérisé en ce que le moyen de traitement est amené sous forme concentrée à la buse de pulvérisation, la concentration étant alors réglée en fonction de la quantité requise.

7. Procédé suivant l'une des revendications 1 à 6, caractérisé en ce que l'on emploie de l'ammoniac gaz, du chlorure d'ammonium, de l'urée ou de la cyanamide de calcium comme moyen de traitement.

8. Procédé suivant l'une des revendications 1 à 7, caractérisé en ce que l'on utilise de l'eau comme milieu vecteur.
